# EUROPÄISCHE PATENTANMELDUNG

(11) **EP 2 481 518 A2**
(43) Veröffentlichungstag der Anmeldung: **01.08.2012**
(21) Anmeldenummer: 12002872.5
(22) Anmeldetag: 29.08.2006
(51) Int. Cl.: B23K 35/30, C22C 19/05, B23P 6/00, B23K 1/00

(54) **Lotlegierung und Verfahren zur Reparatur eines Bauteils**

(30) Priorität: 14.09.2005 EP 05019966
(62) Teilanmeldung aus: 06793041.2
(71) Anmelder: Siemens Aktiengesellschaft, 80333 München (DE)
(72) Erfinder: Heinz, Paul, 91052 Erlangen (DE); Ott, Michael, Dr., 45470 Mülheim an der Ruhr (DE)

(57) **Zusammenfassung**

Die Erfindung betrifft eine Lotlegierung gemäß Anspruch 1 und ein Verfahren zur Reparatur eines Bauteils gemäß Anspruch 43. Lotverfahren mit den verwendeten Loten haben oft den Nachteil, dass das Lot schlechte Hochtemperatureigenschaften aufweist.

Die erfindungsgemäße Lotlegierung ist nickelbasiert und weist die Bestandteile Chrom, Kobalt, Wolfram auf sowie 0,5% bis 22,4wt% eines der Elemente aus der Gruppe Scandium, Aluminium, Titan, Zirkon oder Tantal und wird bei dem erfindungsgemäßen Verfahren zur Reparatur eines Bauteils verwendet.

## Beschreibung

Die Erfindung betrifft eine Lotlegierung gemäß Anspruch 1 und ein Verfahren zur Reparatur eines Bauteils gemäß Anspruch 42.

Bauteile müssen manchmal nach der Herstellung, beispielsweise nach dem Gießen oder nachdem sie im Einsatz waren und Risse gebildet haben, repariert werden.

Hierzu gibt es verschiedene Reparaturverfahren wie z. B. das Schweißverfahren, bei dem jedoch ein Substratmaterial des Bauteils mit aufgeschmolzen werden muss, was zu einer Schädigung insbesondere von gegossenen und gerichtet erstarrten Bauteilen sowie zur Verdampfung von Bestandteilen des Substratmaterials führen kann.

Ein Lotverfahren arbeitet gegenüber der Temperatur beim Schweißverfahren und damit gegenüber der Schmelztemperatur des Substratmaterials bei niedrigeren Temperaturen.

Das Lot soll aber trotzdem eine hohe Festigkeit aufweisen, damit der mit Lot aufgefüllte Riss oder die Vertiefung bei hohen Einsatztemperaturen nicht zu einer Schwächung des gesamten Bauteils bei den hohen Einsatztemperaturen führt.

Die US-Patentschriften US 4,908,185, US 5,993,980, US 4,913,752, US 4,915,903 sowie die US 4,789,412 offenbaren die Zugabe von Additiven, bei dem Scandium eines der möglichen Additive darstellt.

Es ist daher Aufgabe der Erfindung eine Lotlegierung und ein Verfahren zur Reparatur eines Bauteils aufzuzeigen, die bzw. das das oben genannte Problem überwindet.

Die Aufgabe wird gelöst durch ein Lot aus einer Lotlegierung gemäß Anspruch 1.

In den Unteransprüchen sind weitere vorteilhafte Maßnahmen aufgelistet, die beliebig in vorteilhafter Art und Weise miteinander kombiniert werden können.
- Figur 1: zeigt zwei Querschnittsansichten eines Bauteils während und nach einer Behandlung mit dem erfindungsgemäßen Lot,
- Figur 2: zeigt eine perspektivische Ansicht einer Turbinenschaufel,
- Figur 3: zeigt eine perspektivische Ansicht einer Brennkammer,
- Figur 4: zeigt eine perspektivische Ansicht einer Gasturbine.

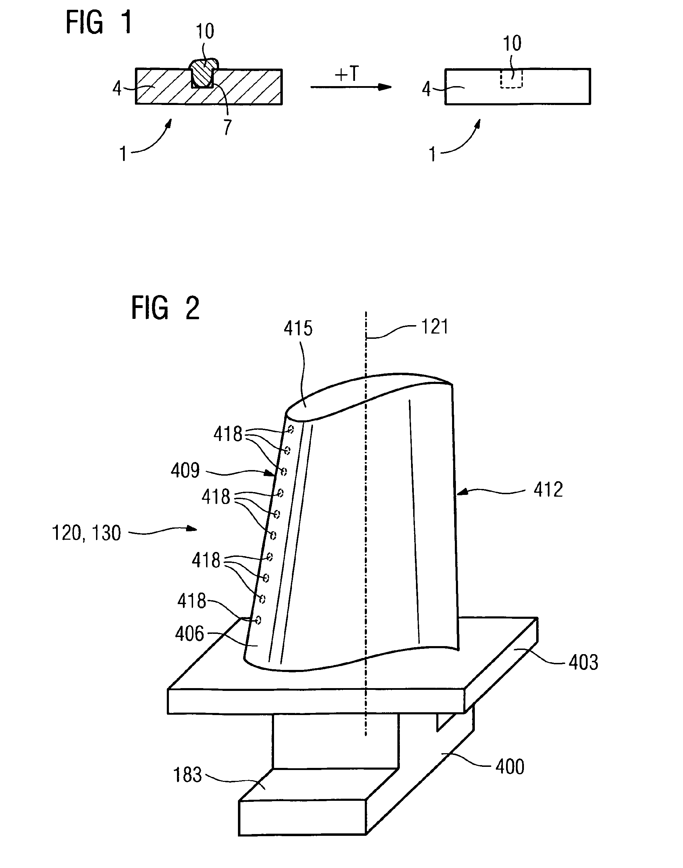

Figur 1 zeigt ein Bauteil 1, das mit einem Lot 10 aus einer erfindungsgemäßen Lotlegierung behandelt wird.

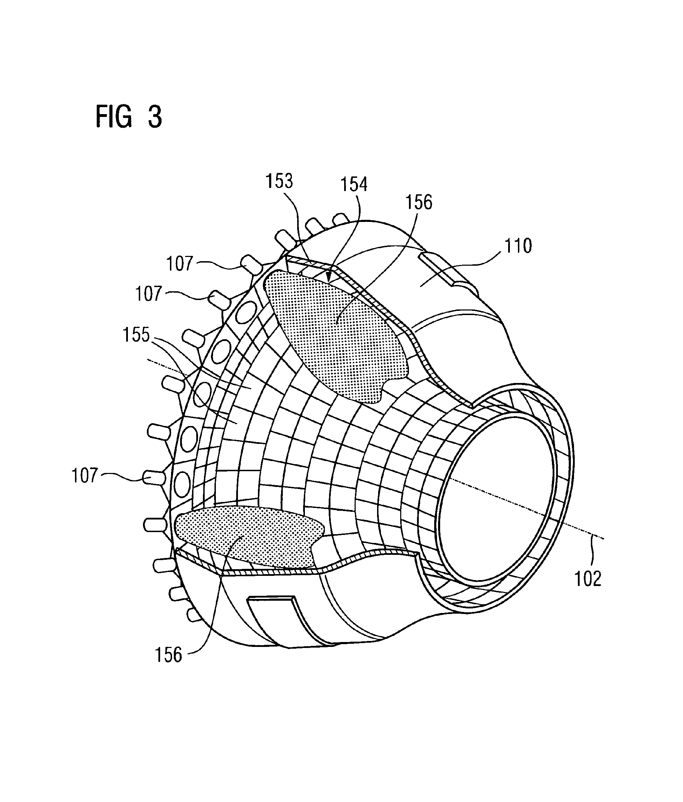

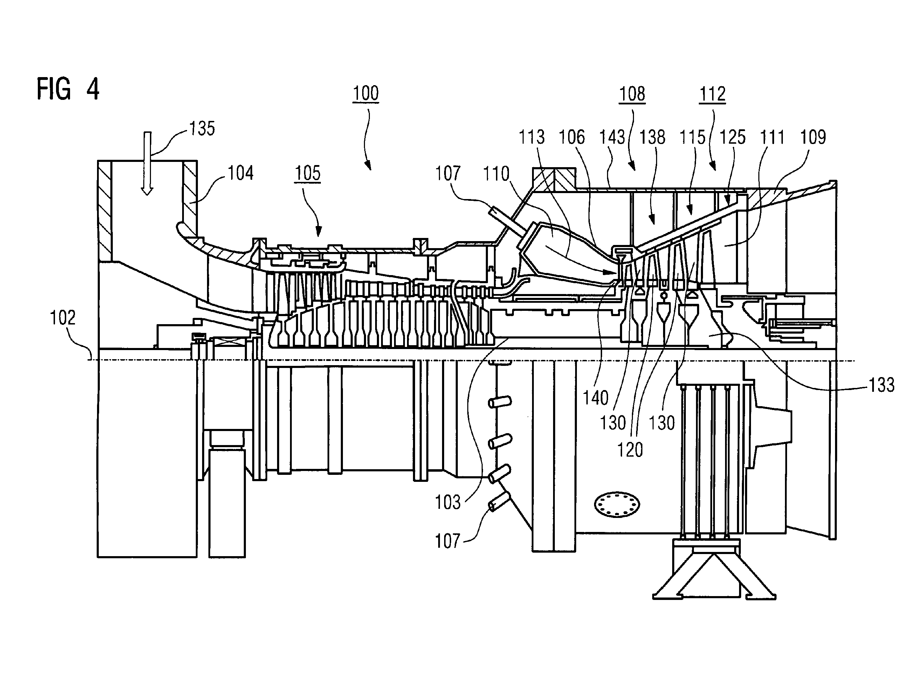

Das Bauteil 1 umfasst ein Substrat 4, das insbesondere bei Bauteilen für Hochtemperaturanwendungen, insbesondere bei Turbinenschaufeln 120, 130 (Fig. 2) oder Brennkammerelementen 155 (Fig. 3) für Dampf- oder Gasturbinen 100 (Fig. 4) aus einer eisen-, nickel- oder kobaltbasierten Superlegierung besteht. Dies können vorzugsweise die bekannten Werkstoffe PWA 1483, PWA 1484 oder Rene N5 sein.

Anwendung findet das Lot 10 auch bei Schaufeln für Luftfahrzeuge.

Das Substrat 4 weist einen Riss 7 oder eine Vertiefung 7 auf, der bzw. die durch Löten aufgefüllt werden soll. Die Risse 7 bzw. Vertiefungen 7 sind vorzugsweise etwa 200µm breit und können bis zu 5mm tief sein.

Dabei wird das Lot 10 aus der Lotlegierung in oder in die Nähe der Vertiefung 7 aufgebracht und durch eine Wärmebehandlung (+T) schmilzt das Lot 10 unterhalb einer Schmelztemperatur des Substrats 4 auf und füllt die Vertiefung 7 vollständig auf.

Die Lotlegierung ist nickelbasiert und weist die weiteren Bestandteile Chrom, Kobalt und Wolfram sowie 2wt% bis 22,4wt% eines Schmelzpunkterniedrigers auf, der zumindest ein Element aus der Gruppe Scandium (Sc), Aluminium (Al), Titan (Ti), Zirkon (Zr) oder Tantal (Ta) aufweist.

Die Anteile von Chrom liegen vorzugsweise bei 7,5% bis 11wt% und insbesondere bei 10wt%.

Die Anteile von Kobalt liegen vorzugsweise zwischen 8% und 11,4wt% und insbesondere bei 10,4wt%.

Die Anteile von Wolfram liegen vorzugsweise bei 2,8wt% bis 6,9wt% und insbesondere bei 3,8wt% oder 5,9wt%.

Vorzugsweise kann auch bis zu 1,9wt%, insbesondere 1,9wt% Molybdän (Mo) zu der Lotlegierung hinzu gegeben werden. Weitere Elemente können vorhanden sein, vorzugsweise ist die obige Auflistung von Nickel, Chrom, Kobalt, Wolfram, des Schmelzpunkterniedrigers und optional Molybdän abschließend. Das Lot enthält vorzugsweise kein Bor, kein Silizium oder auch kein Hafnium.

Auch auf die Zugabe von Rhenium kann vorzugsweise verzichtet werden.

Ebenso wird vorzugsweise kein Kohlenstoff verwendet.

Das Lot 10 kann in einem isothermalen oder einem Temperaturgradienten-Verfahren mit dem Substrat 4 des Bauteils 1, 120, 130, 155 verbunden werden. Ein Gradientenverfahren bietet sich dann an, wenn das Substrat 4 eine gerichtete Struktur, beispielsweise eine SX- oder DS-Struktur aufweist, sodass auch das Lot 10 anschließend eine gerichtete Struktur aufweist.

Ebenso braucht das Bauteil 1 keine gerichtet erstarrte Struktur (sondern eine CC Struktur) aufzuweisen, wobei durch die gerichtet erstarrte Struktur in der reparierten Stelle 3 bei hohen Temperaturen eine hohe Festigkeit des Bauteils 1 erreicht wird, weil die gerichtet erstarrte Struktur des Lots 7 in der reparierten Stelle den negativen Effekt des niedrigen Schmelzpunkts auf die mechanische Festigkeit bei hohen Temperaturen ausgleicht.

Bei dem Aufschmelzen (Isothermales Verfahren oder mit Gradientenverfahren) wird vorzugsweise ein inertes Gas, insbesondere Argon verwendet, das die Chromabdampfung von dem Substrat 4 bei den hohen Temperaturen verringert oder es wird ein reduzierendes Gas (Argon/Wasserstoff) verwendet.

Das Lot 10 kann auch großflächig auf eine Oberfläche eines Bauteils 1, 120, 130, 155 aufgebracht werden, um eine Verdickung des Substrats 4, insbesondere bei hohlen Bauteilen zu erreichen. Vorzugsweise wird das Lot 10 dazu verwendet um Risse 7 oder Vertiefungen 7 aufzufüllen.

Die Tabelle zeigt beispielhafte erfindungsgemäße Zusammensetzungen HT der Lotlegierung des Lots 10 (in wt%), wobei der Rest Nickel ist.

| **Legierung** | **Cr** | **Co** | **Mo** | **W** | **Ta** | **Al** | **Ti** | **Zr** | **Sc** |
|---|---|---|---|---|---|---|---|---|---|
| HT1 | 10 | 9 | 0 | 3,8 | 3 | 3 | 0 | 13,4 | 0 |
| HT2 | 10 | 9 | 1,9 | 3,8 | 0 | 3 | 0 | 13,4 | 0 |
| HT3 | 10 | 9 | 0 | 5,9 | 0 | 3 | 0 | 13,4 | 0 |
| HT4 | 10 | 9 | 0 | 3,8 | 3 | 0 | 3 | 13,4 | 0 |
| HT5 | 10 | 9 | 1,9 | 3,8 | 0 | 0 | 3 | 13,4 | 0 |
| HT6 | 10 | 9 | 0 | 3,8 | 0 | 0 | 0 | 0 | 8 |
| HT7 | 10 | 9 | 0 | 3,8 | 3 | 0 | 0 | 0 | 10 |
| HT8 | 10 | 9 | 0 | 3,8 | 0 | 0 | 0 | 0 | 6 |
| HT9 | 10 | 9 | 0 | 3,8 | 0 | 0 | 3 | 13,4 | 0 |
| HT10 | 10 | 9 | 0 | 3,8 | 0 | 3 | 0 | 13,4 | 0 |
| HT11 | 8,5 | 10,4 | 0 | 4,4 | 0 | 0 | 0 | 13,4 | 0 |
| HT12 | 8,5 | 10,4 | 0 | 4,4 | 0 | 0 | 0 | 13,4 | 0,5 |
| HT13 | 10 | 9 | 0 | 3,8 | 0 | 0 | 0 | 0 | 10 |
| HT14 | 8,5 | 9 | 1,9 | 3,8 | 0 | 3 | 3 | 13,4 | 0 |
| HT15 | 8,5 | 10 | 0 | 3,8 | 0 | 0 | 3 | 0 | 0 |
| HT16 | 10 | 9 | 0 | 3,8 | 0 | 3 | 3 | 0 | 0 |
| HT17 | 10 | 9 | 0 | 3,8 | 3 | 3 | 0 | 0 | 0 |
| HT18 | 10 | 9 | 1,9 | 3,8 | 0 | 3 | 3 | 0 | 0,5 |
| HT19 | 10 | 10 | 1,9 | 5,9 | 0 | 0 | 3 | 13,4 | 0 |
| HT20 | 10 | 9 | 1,9 | 5,9 | 3 | 3 | 0 | 13,4 | 0 |
| HT21 | 10 | 10 | 1,9 | 3,8 | 3 | 3 | 3 | 13,4 | 0 |
| HT22 | 10 | 9 | 0 | 3,8 | 0 | 3 | 0 | 0 | 6 |
| HT23 | 10 | 9 | 1,9 | 5,9 | 0 | 0 | 0 | 0 | 2 |
| HT24 | 10 | 9 | 1,9 | 3,8 | 0 | 0 | 0 | 13,4 | 2 |
| HT25 | 10 | 9 | 1,9 | 3,8 | 0 | 0 | 0 | 13,4 | 4 |
| HT26 | 10 | 9 | 1.9 | 3.8 | 0 | 0 | 0 | 13.4 | 0 |
| HT27 | 8 | 9 | 1,9 | 1,8 | 5 | 3,6 | 4,1 | 14Hafnium | 0 |

Die Lotlegierungen lassen sich vorzugsweise zumindest in vier Segmente bezüglich der Zusammensetzung des Schmelzpunkterniedrigers bestehend aus Zr, Al, Ti, Ta und Sc aufteilen: das erste Segment enthält zumindest Zirkon, das zweite weist zumindest Scandium auf, ein drittes Segment enthält kein Zirkon und kein Scandium sowie ein viertes Segment weist Zirkon, Aluminium, Titan, Tantal mit kleinen Anteilen von Scandium (bis 2 wt%) auf.

Das erste Segment besteht entweder nur aus Zirkon (Ansprüche 1 + 2) oder nur aus Zirkon, Aluminium, Titan und Tantal (Ansprüche 1 + 4) oder nur aus Zirkon und zwei weiteren Elementen aus der Gruppe Aluminium, Titan, Tantal (Ansprüche 1 + 5) oder nur aus Zirkon mit einem Element aus der Gruppe Aluminium, Titan, Tantal (Ansprüche 1 + 6).

Besonders vorteilhaft ist die Verwendung von Titan, Aluminium und/oder Zirkon, da diese Elemente die Bildung der y'-Phase in einem nickelbasierten Werkstoff fördern, die die mechanischen Hochtemperatureigenschaften verbessert. Dabei kann eins, zwei oder drei dieser drei Elemente vorteilhafterweise in dem Lot 10 (siehe HT5, HT9, HT10, HT14, HT19) verwendet werden.

Das zweite Segment besteht entweder nur aus Scandium (Ansprüche 1 + 7) oder nur aus Scandium, Aluminium, Titan und Tantal (Ansprüche 1 + 8 + 12 + 13) oder nur aus Scandium und zwei Elementen der Gruppe Aluminium, Titan oder Tantal (Ansprüche 1 + 8 + 12 + 14) oder nur aus Scandium und einem Element der Gruppe Aluminium, Titan, Tantal (Ansprüche 1 + 8 + 12 + 15).

Das dritte Segment besteht aus zumindest einem Element der Gruppe Aluminium, Titan oder Tantal und enthält kein Zirkon und kein Scandium, wobei ein erstes Beispiel des dritten Segment mit den drei Elementen der Gruppe Aluminium, Titan und Tantal dargestellt wird (Ansprüche 1 + 17). Ebenso kann der Schmelzpunkterniedriger zwei Elemente aus der Gruppe Aluminium, Titan oder Tantal enthalten (Ansprüche 1 + 12 + 18 + 14) oder es wird nur ein Element aus der Gruppe Aluminium, Titan oder Tantal verwendet (Anspruch 1 + 12 + 18 + 15).

Das vierte Segment besteht aus Zirkon, kleinen Anteilen (bis 2wt%) von Scandium und bis zu drei Elementen aus der Gruppe Aluminium, Titan und Tantal:
Zr + Sc + 3 aus (Al, Ti, Ta): Ansprüche 1 + 3 + 13 + 25;
Zr + Sc + 2 aus (Al, Ti, Ta): Ansprüche 1 + 3 + 14 + 25;
Zr + Sc + 1 aus (Al, Ti, Ta): Ansprüche 1 + 3 + 15 + 25.

Als beste Lotlegierungen haben sich die (kombinierte Ansprüche in Klammern)
HT1:1 + 3 + 5 + 10 + 18 + 22 + 28 + 30 + 32 + 36 + 42,
HT2:1 + 3 + 6 + 18 + 19 + 22 + 24 + 27 + 28 + 30 + 32 +35+42,
HT3:1 + 3 + 6 + 18 + 19 + 22 + 24 + 27 + 28 + 30 + 34 +36+42,
HT4:1 + 3 + 5 + 9 + 18 + 20 + 21 + 23 + 28 + 30 + 32 + 36+42,
HT5:1 + 3 + 6 + 18 + 20 + 23 + 24 + 28 + 30 + 32 + 35 + 42,
HT6:1 + 7 + 8 + 28 + 30 + 32 + 36 + 38 + 42
HT7:1 + 8 + 12 + 15 +21 + 22 + 23 + 28 + 30 + 32 + 36 + 39+42
HT8:1 + 7 + 8 + 28 + 30 + 32 + 36 + 37 + 42
HT9:1 + 3 + 6 + 18 + 20 + 23 + 24 + 28 + 30 + 32 + 36 + 40+42
HT10:1 + 3 + 6 + 18 + 19 + 22 + 24 + 28 + 30 + 32 + 36 +40+42
HT11:1 + 2 + 18 + 22 + 23 + 24 + 29 + 31 + 33 + 36 + 40 + 42
HT12:1 + 3 + 22 + 23 + 24 + 25 + 29 + 31 + 33 + 36 + 40 + 42
HT13:1 + 7 + 8 + 28 + 30 + 32 + 36 + 39 +41 + 42 erwiesen.

Ebenso kann eine bevorzugte Lotlegierung kein Chrom aufweisen.

Ebenso können bevorzugte Werte für Chrom im Bereich von 4,0wt% bis kleiner 7,5wt% liegen.

Einen weiteren bevorzugten Bereich stellt ein Anteil von größer 11wt% bis größer 12wt% Chrom dar.

Bevorzugterweise wird auch kein Kobalt für die Lotlegierung verwendet.

Ein weiterer vorteilhafter Wertebereich für Kobalt liegt im Bereich von 4wt% bis kleiner 8wt%.

Ebenso kann bevorzugtermaßen die Lotlegierung kein Wolfram enthalten.

Bevorzugte Werte für Wolfram stellen auch Werte zwischen 1,8wt% und kleiner 2,8wt% dar.

Bevorzugtermaßen wird zu der Lotlegierung auch Rhenium (Re) zugegeben, insbesondere in einem Bereich von 2,5wt% bis 3wt%.

Bevorzugtermaßen wird auch zumindest ein, insbesondere ein Selten Erdelement, insbesondere Yttrium (Y) hinzugefügt, und das bevorzugtermaßen in einem Wertebereich von 0,5wt% bis 2wt%.

Auch wird Hafnium hinzugefügt, insbesondere in einem Wertebereich von 0,5wt% bis 2,5wt%.

Figur 2 zeigt in perspektivischer Ansicht eine Laufschaufel 120 oder Leitschaufel 130 einer Strömungsmaschine 100 (Fig. 4), die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine Wärmedämmschicht vorhanden sein und besteht beispielsweise aus· ZrO₂, Y₂O₄-ZrO₃, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 mit dem erfindungsgemäßen Lot 10 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 3 zeigt eine Brennkammer 110 einer Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 Al, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse mit dem erfindungsgemäßen Lot 10 in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Filmkühllöcher (nicht dargestellt) auf.

Die Figur 4 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile werden beispielsweise eisen-, nickel- oder kobaltbasierte Superlegierungen verwendet. Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Lotlegierung auf Nickelbasis,
umfassend (in wt%),
insbesondere bestehend aus (in wt%)
Chrom (Cr), insbesondere 7,5wt% bis 11wt%, besonders bevorzugt 8,5% bis 10% Cr,
Kobalt (Co), insbesondere 8,0wt% bis 11,4wt%, besonders bevorzugt 9,0% bis 10,4% Co,
Wolfram (W), insbesondere 2,8wt% bis 6,9wt%, besonders bevorzugt 3,8% bis 5,9% W,
sowie 2% bis 22,4%, insbesondere 3% bis 19,4%,
eines Schmelzpunkterniedrigers,
der Schmelzpunkterniedriger Tantal (Ta) enthält, insbesondere 3wt% Ta
und der zumindest ein Element aus der Gruppe enthält, die Scandium (Sc), Zirkon (Zr), Aluminium (Al) und Titan (Ti) umfasst,
optional bis 1.9% Molybdän (Mo) und
Rest Nickel (Ni).

2. Lotlegierung nach Anspruch 1,
**dadurch gekennzeichnet, dass**
der Schmelzpunkterniedriger kein Zirkon (Zr) enthält.

3. Lotlegierung nach Anspruch 1 oder 2,
**dadurch gekennzeichnet, dass**
der Schmelzpunkterniedriger die Elemente Tantal (Ta), Aluminium (Al) und Titan (Ti) aufweist,
insbesondere zu gleichen Anteilen.

4. Lotlegierung nach Anspruch 1, 2 oder 3,
**dadurch gekennzeichnet, dass**
der Schmelzpunkterniedriger kein Scandium (Sc) enthält.

5. Lotlegierung nach Anspruch 1, 2 oder 3,
**dadurch gekennzeichnet, dass**
der Schmelzpunkterniedriger Aluminium (Al) enthält, insbesondere 3wt% Al,
und/oder
dass der Schmelzpunkterniedriger Titan (Ti) enthält, insbesondere 3wt% Ti
und/oder
dass die Legierung Molybdän enthält, insbesondere 1,9wt%.

6. Lotlegierung nach Anspruch 1,
**dadurch gekennzeichnet, dass**
die Legierung kein Molybdän enthält.

7. Lotlegierung nach einem oder mehreren der vorherigen Ansprüche,
**dadurch gekennzeichnet, dass**
die Legierung kein Chrom enthält.

8. Lotlegierung nach einem oder mehreren der vorherigen Ansprüche 1 bis 7,
**dadurch gekennzeichnet, dass**
die Lotlegierung 4,0wt% bis < 8,5wt%,
insbesondere 4wt% bis < 7,5wt% Chrom enthält, und/oder dass die Lotlegierung > 10wt% bis 12,5wt%, insbesondere 11wt% bis 12,5wt% Chrom enthält.

9. Lotlegierung nach einem oder mehreren der vorherigen Ansprüche,
**dadurch gekennzeichnet, dass**
die Lotlegierung Kobalt im Bereich von 4,0wt% bis < 9wt%, insbesondere 4wt% bis < 8wt% enthält.

10. Lotlegierung nach einem oder mehreren der vorherigen Ansprüche 1 bis 9,
**dadurch gekennzeichnet, dass**
die Lotlegierung kein Kobalt enthält.

11. Lotlegierung nach einem oder mehreren der vorherigen Ansprüche,
**dadurch gekennzeichnet, dass**
die Lotlegierung kein Wolfram enthält.

12. Lotlegierung nach einem oder mehreren der vorherigen Ansprüche 1 bis 11,
**dadurch gekennzeichnet, dass**
die Lotlegierung 1,8wt% bis < 3,8wt%,
insbesondere 1,8wt% bis < 2,8wt% Wolfram enthält.

13. Lotlegierung nach einem oder mehreren der vorherigen Ansprüche,
**dadurch gekennzeichnet, dass**
die Lotlegierung zumindest ein Selten Erdelement, insbesondere Yttrium,
enthält,
insbesondere 0,5wt% bis 2wt%,
und/oder
dass die Lotlegierung Hafnium enthält,
insbesondere im Bereich von 0,5wt% bis 2,5wt%.

14. Verfahren zur Reparatur eines Bauteils (1),
bei dem ein Lot (10) gemäß einem oder mehreren der vorherigen Ansprüche 1 bis 13 verwendet wird und
ein Lotverfahren isothermal oder mittels eines Temperaturgradienten des Lotes durchgeführt wird.

15. Verfahren nach Anspruch 14,
bei dem
das Lot für die Legierungen PWA 1483, PWA 1484 oder Rene N5 verwendet wird,
insbesondere bei dem
das Lot gerichtet,
ganz insbesondere einkristallin, erstarrt wird.
